# EUROPEAN PATENT APPLICATION

(11) **EP 3 796 578 A1**
(43) Date of publication of application: **24.03.2021**
(21) Application number: 20195073.0
(22) Date of filing: 08.09.2020
(51) Int. Cl.: H04K 3/00

(54) **METHOD AND SYSTEM OF PROVIDING AT LEAST ONE SIGNAL AS WELL AS TEST AND MEASUREMENT SYSTEM FOR ROBUSTNESS TESTING OF A SIGNAL RECEIVER**

(30) Priority: 18.09.2019 DE 102019006603
(71) Applicant: Rohde & Schwarz GmbH & Co. KG, 81671 München (DE)
(72) Inventor: Kuehne, Jens, 81671 München (DE)
(74) Representative: Prinz & Partner mbB

(57) **Abstract**

A method of providing at least one signal, particularly a superimposing test signal, comprises the step of gathering information that comprises at least a scrambling and/or spreading code of at least one signal emitter; and the step of emitting at least a first signal during a first preconfigured time slot, wherein the first signal uses the same scrambling and/or spreading code as the first signal emitter, and wherein the first signal has pseudo noise as payload. Further, a system for providing at least one signal as well as a test and measurement system for testing robustness of a signal receiver are described.

## Description

The invention relates to a method and system of providing at least one signal. Further, the invention relates to a test and measurement system for testing the robustness of a signal receiver.

In the past, aerial drones, for instance private controlled ones, become an increasing problem at airports, as they might disturb the operating processes at the airports. The aerial drones may penetrate the respective airspace, endangering airplanes during landing and/or take-off.

Further, using those aerial drones is also forbidden at other public places for security reasons. For instance, it is not allowed to operate aerial drones in an airspace assigned to an audience of an open-air concert, a festival or the like.

Typically, aerial drones are controlled by radio signals received from radio transmitters that emit the respective radio signals. However, modern aerial drones may also be controlled by global navigation satellite system (GNSS) signals, for instance signals that relate to the Global Positioning System (GPS) or the European counterpart system that is called Galileo. Other GNSS signals relate to the Russian GLObal NAvigation Satellite System (GLONASS) and Chinese system that is called BeiDou.

In any case, a modern aerial drone corresponds to a signal receiver for the respective signals emitted by at least one signal emitter of the respective type, for instance a GNSS signal emitter such as a satellite.

As mentioned above, operating aerial drones is restricted and, thus, it might be important to prevent the operation of these aerial drones at certain areas. Typically, this is done by jamming the respective GNSS signals by means of chirp signals having relatively high power in order to superimpose the GNSS signals such that the respective signal receiver, namely the aerial drone, receives the jamming signal.

This concept can be used at stationary areas such as airports since the systems for jamming the GNSS signals require a lot of power, which in turn requires respective facilities in order to provide the power necessary. However, open-air concerts or other public events such as festivals may take place at locations that do not have the respective facilities necessary for operating the systems known in the state of the art.

In addition, besides the devices not allowed to be operated at certain areas such as third-party aerial drones, other devices shall be operated which, however, use the same kind of signals, for instance GNSS signals. Hence, it is also important that those devices are robust against jamming.

Accordingly, the devices permitted to be operated in the respective area are typically tested previously with respect to their robustness against jamming signals by means of a test and measurement system. Typically, these test and measurement systems provide at least one signal, particularly a wanted signal and a test signal that superimposes the wanted signal, in order to verify how robust the respective device is against jamming.

Hence, there is a need for a method and a system, which ensure that only devices permitted are operated in a certain area in an efficient manner while using less power.

The invention provides a method of providing at least one signal, particularly a superimposing test signal, comprising the following steps:
- Gathering information that comprises at least a scrambling and/or spreading code of at least one signal emitter; and
- Emitting at least a first signal during a first preconfigured time slot, wherein the first signal uses the same scrambling and/or spreading code as the first signal emitter, and wherein the first signal has pseudo noise as payload.

Further, the invention provides a system for providing at least one signal, comprising a waveform processor and at least one antenna assigned to the waveform processor. The waveform processor is configured to create at least one signal to be emitted by means of the at least one antenna during an assigned preconfigured time slot based on information gathered. The information comprises at least a scrambling and/or spreading code of at least one signal emitter. The waveform processor is configured to create the at least one signal to be emitted such that the at least one signal uses the same scrambling and/or spreading code as the respective signal emitter. The waveform processor is configured to create the signal such that the signal has pseudo noise as payload.

The invention is based on defining that the first signal corresponds to a signal that is emitted by the respective signal emitter as the respective signal has the same scrambling code and/or spreading code as the signal emitted by the first signal emitter. Put differently, the signal is created according to the standards of the respective signal emitter while using the same scrambling and/or spreading code. However, the payload of the signal is pseudo noise such that no (useful) information is transmitted by means of the first signal. This means that neither correct information nor any incorrect information is transmitted by the first signal since only pseudo noise (content) is provided by the first signal.

The signal may be used to disturb the communication between the respective signal emitter, namely the one which scrambling and/or spreading code is used, and a corresponding signal receiver.

In other words, the method provides a signal, namely a jamming signal or rather a disturbing signal, which is used for effective jamming a global navigation satellite system signal, namely at least one signal that is emitted by a global navigation satellite system signal emitter, for instance a satellite.

Thus, the respective signal provided by the system may correspond to a jamming signal or rather a disturbing signal.

Accordingly, the signal emitter may relate to a global navigation satellite system (GNSS) signal emitter, particularly a satellite. Hence, the respective signal provided by the system, namely the jamming or rather disturbing signal, may relate to a GNSS signal.

As the at least one jamming signal has the same scrambling and/or spreading code as a certain signal emitted by the first global navigation satellite system signal emitter, for instance the respective satellite of the system, a certain signal receiver to be disturbed synchronizes with the jamming signal emitted and, thus, loses communication with the respective GNSS signal emitter. Put differently, the first signal emitted disturbs the communication between the first signal emitter and the signal receiver while superseding the previously established communication link between the first signal emitter and the signal receiver.

Since the same scrambling and/or spreading code is used, it is ensured that disturbing/jamming takes place after de-spreading. In contrast thereto, typical chirp signals disturb communication prior to de-spreading. Since the jamming takes place after de-spreading, a higher jamming efficiency is obtained even though the same radio frequency (RF) power used for providing the first signal is used. Put differently, the same jamming efficiency can be obtained while using the first signal with less RF power. Hence, the respective system does not have to require the respective facilities for providing high RF power.

An aspect provides that the first signal simulates a respective signal of the first signal emitter. As discussed above, the first jamming signal may relate to a respective global navigation satellite system signal that is emitted by the first global navigation satellite system signal emitter, namely the respective satellite. This ensures that the signal emitted by other real global navigation satellite system signal emitters is superposed by the jamming signal provided such that the signal receiver synchronizes with the jamming signal instead of the global navigation satellite system signal. However, the signal receiver does not obtain any usable information, as the payload relates to pseudo noise. Hence, the signal receiver will discard the first signal emitter, particularly from an internal list of possible or rather available signal emitters.

Another aspect provides that a second signal is emitted during a second preconfigured time slot, wherein the second signal uses the same scrambling and/or spreading code as a second signal emitter, and wherein the second signal has pseudo noise as payload. Thus, a second jamming signal may be emitted that uses the same scrambling and/or spreading code as the second global navigation satellite system signal emitter, namely a second satellite. Similar to the first signal, the second signal is created according to the standards of the respective signal emitter, namely the second signal emitter, while using the same scrambling and/or spreading code. However, the payload of the signal is pseudo noise such that no (useful) information is transmitted by means of the second signal. This means that neither correct information nor any incorrect information is transmitted by the second signal since only pseudo noise (content) is provided by the second signal.

The second signal may also disturb the communication between the second signal emitter, namely the one which scrambling and/or spreading code is used, and the corresponding signal receiver. Thus, the second signal emitter may also relate to a global navigation satellite system (GNSS) signal emitter, particularly a satellite.

In other words, the method provides two signals, namely two jamming signals or rather two disturbing signals, that are used for effective jamming global navigation satellite system signals. Particularly, at least a signal that is emitted by a first global navigation satellite system signal emitter, for instance a first satellite, and a signal that is emitted by a second global navigation satellite system signal emitter are disturbed, for instance a second satellite.

As the jamming signals have the same scrambling and/or spreading code as the certain signals emitted by the first global navigation satellite system signal emitters, for instance the respective satellites of the system, the certain signal receiver to be disturbed synchronizes with the jamming signals emitted and, thus, loses communication with the respective GNSS signal emitters. Put differently, the signals emitted disturb the communication between the respective signal emitters and the signal receiver.

Generally, the first signal, namely the first jamming signal, as well as the second signal, namely the second jamming signal, are emitted during preconfigured time slots ensuring that the signal receiver receives the respective signals for certain time periods. Typically, the signal receiver switches from the first signal emitter to the second signal emitter in case of not receiving a valid signal from the first signal emitter.

As the first (jamming) signal comprises pseudo noise as payload, the signal receiver will not receive a valid signal and, thus, the signal receiver will switch to the second signal emitter. As the second (jamming) signal also comprises only pseudo noise as payload, the second signal received by the signal receiver is also invalid.

Typically, the signal receiver may cancel or rather discard the respective signal emitter from an internal list of available signal emitters provided that the signal receiver does not receive a valid signal from the respective signal emitter. Hence, providing (jamming) signals having the same scrambling and/or spreading code as signals emitted by the respective signal emitters while simultaneously having pseudo noise as respective payload ensures that the list of available signal emitters is reduced, which is used by the signal receiver for establishing a communication link.

Typically, the first and second signals are emitted in a subsequent manner. Particularly, the second signal is emitted after the first preconfigured time slot has expired in which the first signal was emitted.

The respective preconfigured time slots, namely the first and the second preconfigured time slots, may have the same length or different lengths.

Furthermore, several different signals may be emitted, particularly in a cyclic manner. The several different signals relate to several different signal emitters that may establish a communication with the signal receiver. As each single signal is emitted for a preconfigured time slot, the first signal may be emitted for the second time after the last signal, namely the one assigned to the last signal emitter, was emitted previously for its respective preconfigured time slot. Accordingly, the different signals may be emitted in a cyclic manner, as the several different signals are repeated in their respective order.

Generally, this ensures that a re-synchronization of the signal receiver with one of the different signal emitters can be avoided effectively. As discussed above, the signal receiver tries to identify a valid content of one of the several signal emitters.

As the signal receiver receives only pseudo noise (content) when receiving the respective signals, the signal receiver will try to use another signal emitter and switches to the next one for establishing a communication link.

Moreover, the signal receiver may discard one signal emitter after another if the signal receiver does not receive a valid signal after a certain number of attempts, for instance two attempts, three attempts or another number of attempts.

Moreover, each of the several different signals is emitted during a respective preconfigured time slot, wherein the several different signals are assigned to several different signal emitters. The information gathered may comprise information regarding these several different signal emitters such as the number of signal emitters and/or the respective scrambling and/or spreading codes. As discussed above, the number of signal emitters indicates the number of different signals to be emitted in order to ensure that all available signal emitters can be simulated such that the signal receiver discards/cancels the respective signal emitters, for instance from an internal list of the signal receiver.

The number of different signals generated and emitted corresponds to the number of signal emitters identified previously, for instance during the step of gathering information provided that the information comprises at least the number of signal emitters and/or the respective scrambling and/or spreading codes. This ensures that the respective signals of these signal emitters can be created and emitted in order to disturb the respective communication.

In addition, signals of different types may be emitted, wherein the signals of different types may be assigned to at least two different types of signal emitters. For instance, GNSS signal emitters may relate to GPS, Galileo, GLONAS and/or BeiDou that are different types of signal emitters. As the signals of different types are emitted, it is ensured that a signal receiver cannot choose between different types of signal emitters, namely different systems, in order to establish a communication link with the respect of signal emitter.

Particularly, the signals of different type may be emitted in a common time slot. As the signals of different type distinguish from each other, for instance by means of the scrambling and/or spreading code as well as other characteristics, it is possible to emit signals of different type simultaneously, as they do not interfere with each other. Thus, it can be avoided effectively that the signal receiver uses a different type of signal emitter.

Another aspect provides that each signal is assigned to a dedicated time slot and/or that each signal is assigned to a dedicated signal emitter. Hence, each signal emitted may be emitted in a regularly or rather time-controlled manner in order to disturb the attempts of the signal receiver to establish a communication link with a certain signal emitter, namely a certain satellite. For the same reason, the respective signals are also assigned to dedicated signal emitters such that signals of the respective signal emitters can be simulated.

Put differently, the respective signals are emitted in predefined time periods for preconfigured time slots, wherein the respective signals are individual signals simulating certain signal emitters. Hence, only signals of a certain signal emitter of a certain type are simulated and emitted during the respective time slots.

The information gathered may be provided automatically and/or by an operator, particularly by means of a user interface. Hence, the system comprises a receiving antenna for receiving a signal of the at least one signal emitter and/or a user interface enabling an operator of the system to input information. Thus, an operator or a user may input the respective information with respect to the scrambling and/or spreading code of the signal emitters via the user interface. Furthermore, the number of signal emitters available, particularly for the respective signal receiver, are also inputted by the operator via the user interface. The user interface may be part of a system used for disturbing the respective communication.

Additionally or alternatively, the respective system may comprise a receiver that receives respective signals of the different signal emitters such that the information concerning the scrambling and/or spreading code of the signal emitters (as well as the number of signal emitters) is obtained automatically by means of the system, particularly by means of the receiver of the system. The receiver may comprise a receiving antenna and an analyzing module for analyzing the signals received via the receiving antenna.

Further, at least the first signal may be used to test robustness of a signal receiver by superimposing a wanted signal for the signal receiver with the first signal. Hence, the first signal may be superimposed with the wanted signal so as to test robustness of the respective signal receiver against jamming done by the first signal. In fact, it is verified whether or not the signal receiver withstands the first signal.

In other words, the at least one signal, namely the first signal, relates to s a test signal that is used to test the robustness of the signal receiver.

In general, the respective signals of the signal emitters, namely GNSS signals, are simulated by means of the system. This means that the modulation and/or coding, for instance the scrambling and/or spreading code, are used according to the respective GNSS standard.

Further, the cyclic or rather subsequent simulation of the different signal emitters, namely signals of those signal emitters, ensures that the entire power of the system available is concentrated on a single signal within the respective preconfigured time slot.

After expiration of the respective preconfigured time slot, the entire power of the system available is concentrated on another single signal, namely the next one.

Accordingly, all receiving paths of a signal receiver are disturbed or rather jammed effectively, as the different signal emitters are deemed to be invalid due to the payload of the respective signals corresponding to pseudo noise instead of true or false information.

For providing the pseudo noise (content), namely the static content, an arbitrary waveform processor is sufficient. Thus, the costs for establishing the system can be reduced due to the simple waveform processor.

The information gathered at the beginning may relate to define a testing or rather jamming constellation.

Generally, the information gathered may relate to the respective standards of the signal emitter(s), namely the GNSS standards, the signal emitters available (satellites in view) as well as information regarding time, date and location of the respective signal emitter(s).

From the information gathered, parameters are extracted that can be used by the waveform processor for creating the at least one signal.

The waveform processor may generate a signal, for instance an IQ signal (in-phase and quadrature data).

Based on the IQ signal or rather the IQ data, the signal to be emitted is generated by means of the high frequency modulator and/or the amplifier.

According to an aspect, the system comprises a high frequency modulator and/or an amplifier, wherein the high frequency modulator and/or the amplifier are/is positioned between the waveform processor and the antenna. Hence, the signal created by the waveform processor is modulated to a high frequency by means of the high frequency modulator. Furthermore, the signal may be amplified by means of the amplifier. Then, the amplified and/or modulated signal is forwarded to the antenna for being emitted.

For instance, the system is a portable system. The system relates to a movable system. Thus, several components of the system, particularly all components of the system, may be incorporated in a housing. Thus, the system relates to a device the housing of which encompasses the respective components. Particularly, the system may be used in field applications. As the power of the signal(s) emitted is lower, it is harder to detect the system disturbing the communication.

Moreover, the invention relates to a test and measurement system for testing robustness of a signal receiver, wherein the test and measurement system comprises the system as described above. The test and measurement system may comprise a device under test that is established by the signal receiver. The test and measurement system may comprise a testing chamber, for instance an anechoic chamber in which the device under test is placed for testing purposes. The system creates and emits the at least one signal for testing the robustness of the device under test, particularly a certain signal receiver to be tested.

Furthermore, the system may comprise several antennas. The several antennas may be used for emitting several signals of different type simultaneously during a common time slot.

The invention is now described with reference to preferred embodiments, which are shown in the enclosed drawings. In the drawings,
- Figur 1 shows a schematic overview of a test and measurement system according to the invention,
- Figur 2 shows a schematic overview of a system for providing at least one signal according to the invention, and
- Figur 3 shows a flow-chart illustrating a method of providing at least one signal according to the invention.

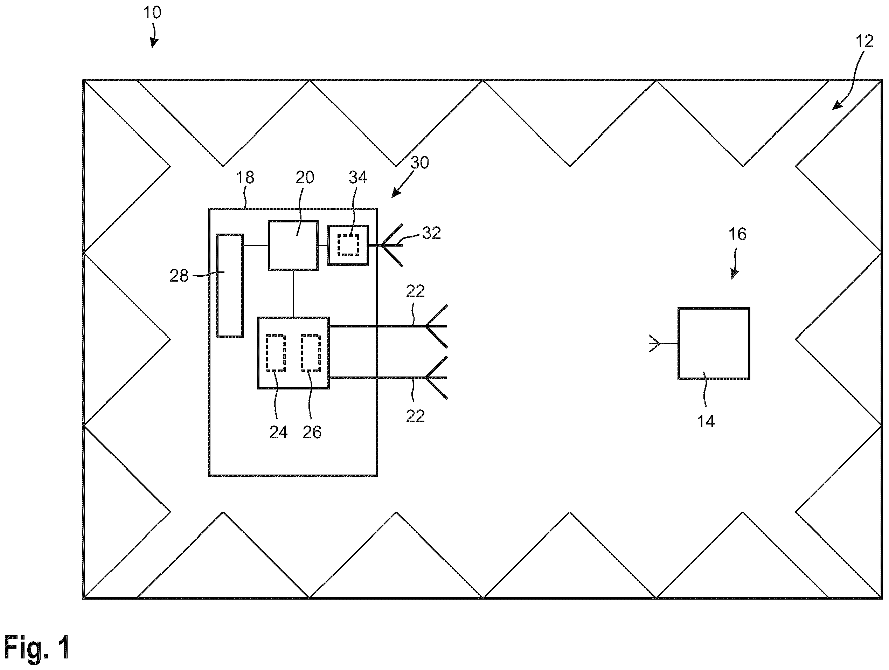

In Figure 1, a test and measurement system 10 for testing robustness of a signal receiver is shown. The test and measurement system 10 comprises a testing space 12 in which a device under test 14 is located that is to be tested.

In the shown embodiment, the testing space 12 relates to a testing chamber, namely an anechoic chamber.

Further, the device test 14 corresponds to a signal receiver 16 which robustness is tested by means of the test and measurement system 10.

The test and measurement system 10 further comprises a system 18 for providing at least one signal that is emitted by the system 18 and received by the signal receiver 16, namely the device under test 14, in order to test the robustness of the signal receiver 16.

The system 18 comprises a waveform processer 20 and at least one antenna 22 that is assigned to the waveform processor 20.

The waveform processor 20 is configured to create at least one signal to be emitted by means of the at least one antenna 22 during an assigned preconfigured time slot based on information that is used by the system 18 for creating the respective signal in a certain manner as will be described later.

The information comprises at least a scrambling and/or spreading code that shall be used by the signal created. The respective scrambling and/or spreading code relates to the one that is used by a signal emitter for the signal receiver 16. Hence, the respective signal emitter is simulated by means of the system 18. In fact, the signal created relates to a signal that would be emitted by the respective signal emitter when communicating with the signal receiver 16.

Moreover, the information may comprise information regarding the number of signal emitters with which the signal receiver 12 may communicate.

The waveform processor 20 creates the at least one signal such that the signal uses the same scrambling and/or spreading code as the respective signal emitter(s) that communicate(s) with the signal receiver 16, namely device under test.

The at least one signal is created by means of the waveform processor 20 such that the signal has pseudo noise as payload. Put differently, the at least one signal does not have any valid information. In fact, the payload does not even comprise false information.

Accordingly, the waveform processor 20 may relate to an arbitrary waveform processor as GNSS signals with simple pseudo noise (content) may be generated by means of the waveform processor 20.

The signal created by the waveform processor 20 is forwarded to an amplifier 24 and a high frequency in modulator 26 prior to being forwarded to the antenna 22 that is assigned to the waveform processor 20. Thus, the higher frequency modulator 26 as well as the amplifier 24 are positioned between the waveform processor and the antenna 22.

Thus, the signal is modulated to a high frequency and amplified such that the test signal provided by the test and measurement system 10, particularly system 18, corresponds to a realistic signal that would be generated by the signal emitter simulated.

The information used by the waveform processor 20 for creating the at least one signal is inputted via a user interface 28 of the system 18 that enables an operator of the system 18 to input the respective information for creating the at least one signal.

Alternatively, the system 18 may comprise a receiver 30 via which real signals are received and analyzed. For this purpose, the receiver 30 comprises a receiving antenna 32 and an analyzing module 34 assigned thereto in order to receive signals from the signal emitter(s) and to analyze these signals. Thus, the information used for creating the at least one signal is automatically retrieved.

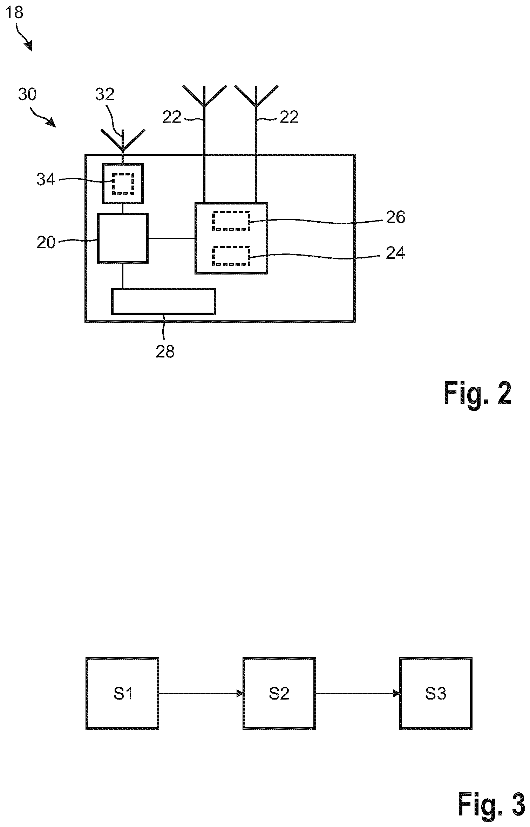

In Figure 2, the system 18 is shown separately from the test and measurement system 10.

The system 18 is established in a portable manner. Thus, the system 18 is a portable system. This means that the system 18 can be used in field application for disturbing signals emitted by (different) signal emitters and to be received by a certain receiver, for instance a signal receiver.

The respective receiver may relate to a signal receiver tested previously by means of the test and measurement system 10.

In general, the system 18, particularly the system shown in Figure 2 as well as the system 18 of the test and measurement system 10, is configured to perform a method as shown in Figure 3. Accordingly, at least one signal can be provided by the system 18 that may be used to test the device under test 14, particularly by superimposing a wanted signal with a test signal provided by the system 18, or rather disturb communication of a signal receiver with at least one signal emitter.

The system 18 may transmit the testing signal and the wanted signal simultaneously.

In a first step S1, information is gathered that comprises at least a scrambling and/or spreading code of at least one signal emitter that might communicate with the signal receiver. This signal emitter is called first signal emitter for distinguishing several different signal emitters as will be described later.

In a second step S2, a first signal is created by means of the waveform processor 20 wherein the waveform processor 20 creates the first signal such that the signal uses the same scrambling and/or spreading code as the respective signal emitter, namely the first signal emitter. Again, the respective signal created is called first signal for distinguishing several different signals from each other as will be described later. Hence, the first signal created relates to the first signal emitter, particularly a signal to be emitted by the first signal emitter. Put differently, the first signal relates to a simulated signal of the first signal emitter.

In addition, the waveform processor 20 creates the first signal such that the first signal has pseudo noise as payload. Accordingly, neither true information nor any false information is transmitted by the first signal, but pseudo noise.

Thus, the content of the first signal may be static. An arbitrary waveform may be provided for the first signal accordingly.

In a third step S3, the first signal created by means of the waveform processor 20 is emitted via the antenna 22 assigned to the waveform processor 20 during a first preconfigured time slot.

Previously, the signal created is processed by the amplifier 24 and/or the high frequency modulator 26 in order to amplify or rather modulate the respective signal prior to feeding the respective signal to the antenna 22.

The signal receiver, for instance the one of the test and measurement system 10 or rather a signal receiver in a field, receives the first signal emitted by the system 18, which uses the same scrambling and/or spreading code as the first signal emitter that typically communicates with the respective signal receiver.

For instance, the first signal simulates a signal of a first satellite wherein the communication of the first satellite shall be disturbed by means of the system 18.

Since the first signal emitted has pseudo noise as payload, the signal receiver receives information that however is invalid. Put differently, the payload has neither true nor false information and, thus, the information is deemed to be invalid by the signal receiver.

Accordingly, the signal receiver processes the pseudo noise (content) received via the respective signal after de-coding while gathering no meaningful information from the payload of the respective signal.

As the information is invalid, the signal receiver cannot process the information obtained by the first signal in a meaningful manner.

Therefore, the signal receiver will switch from the first signal emitter, namely the first GNSS signal emitter, to a second signal emitter, namely a second GNSS signal emitter, while attempting to establish a communication in order to receive valid information from the second signal emitter.

Typically, the signal receiver switches from the first signal emitter to the second signal emitter after a certain period of time. This period of time may correspond to the first preconfigured time slot during which the first signal is emitted by the system 18.

In fact, it was verified previously how long the respective signal receiver tries to establish a communication with a certain signal emitter. The period of time is measured and stored in the system 18 such that the system 18 emits the respective signal simulating signals of the respective signal emitter for the certain period of time.

Accordingly, the system 18, particularly its waveform processor 20, creates the first signal for the first preconfigured time slot wherein the respective signal is emitted.

After the first preconfigured time slot, the system 18 creates and emits a second signal that is different to the first signal.

Put differently, the system 18 changes the signal(s) emitted when the signal receiver tries to establish a communication with the second signal emitter instead of the first signal emitter.

The second signal uses the same scrambling and/or spreading code as the second signal emitter to which the signal receiver has switched for establishing the respective communication.

In addition, the second signal also has pseudo noise as payload such that no valid information is received by the signal receiver.

In a similar manner as discussed above with respect to the first signal, the second signal is also created by means of the waveform processor 20 and emitted by means of the at least one antenna 22 during a second preconfigured time slot.

Hence, the signal receiver attempting to establish a communication with the second signal emitter only receives the second signal provided by the system 18 instead of a true signal of the second signal emitter. Again, the signal receiver tries to establish the communication for a certain period of time that corresponds to the second preconfigured time slot during which the second signal is emitted by the system 18.

After the certain period of time, the signal receiver switches to another signal emitter, namely a third one, in order to receive valid information from the third signal emitter.

However, the system 18 also creates and emits another signal, namely a third one, in order to disturb communication of the signal receiver with the third signal emitter.

Again, the third signal also comprises the same scrambling and/or spreading code as the third signal emitter while having pseudo noise as payload. Thus, the signal receiver will also have to switch to another signal emitter for establishing a communication.

This procedure repeats in a cyclic manner for all signal emitters available for the signal receiver until a signal receiver is found providing valid information.

However, the information gathered at the beginning comprises information of all signal emitters available, particularly the number of signal emitters available as well as the scrambling and/or spreading code of the signal emitters.

Put differently, the system 18 is enabled to create and to emit several different signals, each having the same scrambling and/or spreading code as a respective signal emitter wherein the different signals each have pseudo noise as payload.

The respective signals created are emitted in respective preconfigured time slots that correspond to the periods of time the signal receiver tries to establish a communication with the respective signal emitters.

Accordingly, it is ensured that the signal receiver is not able to establish a valid communication with one of the several signal emitters that are available and intended for communication. Put differently, the system 18 avoids a valid communication between the signal receiver and any of the signal emitters. Thus, the system 18 effectively disturbs or rather yams communication of the signal receiver and the signal emitter(s) available.

The signal receiver may try to establish a communication with any of the signal emitters for several times.

Accordingly, the system 18 creates and emits the different signals in a cyclic manner in order to avoid a re-synchronization with any of the signal emitters during a second or further attempt.

The signals may be created and emitted in a cyclic manner in the same order or another order used by the signal receiver.

After one or several attempts of establishing a communication with a certain signal emitter, the signal receiver typically cancels/discards the respective signal emitter from an internal list of available signal emitters. Afterwards, the signal receiver will not try to establish a communication with the respective signal emitter anymore.

As cancelling/discarding the respective signal emitter is done for each and every signal emitter available after a certain time, the signal receiver is no more able to communicate with one of the several signal emitters.

Accordingly, the communication is disturbed effectively.

In general, the system 18 enables disturbing communication with the signal receiver in an efficient manner, as the entire power available can be concentrated in a single signal during the respective preconfigured time slot in order to disturb only the signal assigned to one of the several signal emitters.

As this focusing of the power available is done in a cyclic manner, all signal emitters available are simulated by the system 18 in a subsequent manner such that all receiving paths of the signal receiver are disturbed effectively. Therefore, no communication is available after a certain time.

In general, the signals emitted by the system 18 may relate to different types of signal emitters.

Generally, the signals may relate to global navigation satellite system (GNSS) signals wherein the different types relate to different types of satellite communication systems, for instance GPS, Galileo, GLONASS and/or BeiDou.

This ensures that the respective signal receiver is not able to establish a communication with one of the several different global navigation satellite systems, as all respective types of global navigation satellite systems are disturbed in an efficient manner.

The signals of different type may be emitted in a subsequent or simultaneous manner.

As the respective signals of different types typically have different scrambling and/or spreading codes, the signals of different types do not interfere with each other and, thus, those signals may be emitted simultaneously.

As discussed above, the information used for creating the signals, such as the scrambling and/or spreading code as well as the number of signal emitters available at the respective time, may be gathered manually. In fact, an operator, may input the information via the user interface 28.

Alternatively, the receiver 30 of the system 18 receives different signals of the signal emitters, which are analyzed internally, namely by means of the analyzing module 34.

In fact, the information is gathered automatically, namely by analyzing the information of the signal(s) received in an automatic manner. The respective information is processed by the system 18 such that the (satellite) communication may be disturbed efficiently without any manual input, as the information required for creating the jamming or rather disturbing signals is gathered automatically.

As the respective power required for disturbing the (satellite) communication is lower compared to using chirp signals, it is ensured that the operator of the system 18 cannot be identified easily. Put differently, the system 18 itself has low radiation, which ensures that it is harder to be detected.

## Claims

1. A method of providing at least one signal, particularly a superimposing test signal, comprising the following steps:
- Gathering information that comprises at least a scrambling and/or spreading code of at least one signal emitter; and
- Emitting at least a first signal during a first preconfigured time slot, wherein the first signal uses the same scrambling and/or spreading code as the first signal emitter, and wherein the first signal has pseudo noise as payload.

2. The method according to claim 1, **characterized in that** the first signal simulates a respective signal of the first signal emitter.

3. The method according to claim 1 or 2, **characterized in that** a second signal is emitted during a second preconfigured time slot, wherein the second signal uses the same scrambling and/or spreading code as a second signal emitter, and wherein the second signal has pseudo noise as payload.

4. The method according to any of the preceding claims, **characterized in that** several different signals are emitted, particularly in a cyclic manner.

5. The method according to claim 4, **characterized in that** each of the several different signals is emitted during a respective preconfigured time slot, wherein the several different signals are assigned to several different signal emitters, in particular wherein the information gathered comprises information regarding these several different signal emitters such as the number of signal emitters and/or the respective scrambling and/or spreading codes.

6. The method according to any of the preceding claims, **characterized in that** signals of different types are emitted, wherein the signals of different types are assigned to at least two different types of signal emitters.

7. The method according to claim 6, **characterized in that** the signals of different type are emitted in a common time slot.

8. The method according to any of the preceding claims, **characterized in that** each signal is assigned to a dedicated time slot and/or that each signal is assigned to a dedicated signal emitter.

9. The method according to any of the preceding claims, **characterized in that** the information gathered is provided automatically and/or by an operator, particularly by means of a user interface.

10. The method according to any of the preceding claims, **characterized in that** at least the first signal is used to test robustness of a signal receiver by superimposing a wanted signal for the signal receiver with the first signal.

11. A system (18) for providing at least one signal, comprising a waveform processor (20) and at least one antenna (22) assigned to the waveform processor (20),
wherein the waveform processor (20) is configured to create at least one signal to be emitted by means of the at least one antenna (22) during an assigned preconfigured time slot based on information gathered, wherein the information comprises at least a scrambling and/or spreading code of at least one signal emitter,
wherein the waveform processor (20) is configured to create the at least one signal to be emitted such that the at least one signal uses the same scrambling and/or spreading code as the respective signal emitter, and
wherein the waveform processor (20) is configured to create the signal such that the signal has pseudo noise as payload.

12. The system (18) according to claim 11, **characterized in that** the system (18) comprises a high frequency modulator (26) and/or an amplifier (24), wherein the high frequency modulator (26) and/or the amplifier (24) are/is positioned between the waveform processor (20) and the antenna (22).

13. The system (18) according to claim 11 or 12, **characterized in that** the system (18) comprises a receiving antenna for receiving a signal of the at least one signal emitter and/or a user interface (28) enabling an operator of the system (18) to input information.

14. The system (18) according to any of claims 11 to 13, **characterized in that** the system (18) is a portable system.

15. A test and measurement system (10) for testing robustness of a signal receiver (16), wherein the test and measurement system (10) comprises the system (18) according to any of claims 11 to 14, in particular wherein the test and measurement system (10) comprises a device under test (14) that is established by the signal receiver (16).
